# EUROPÄISCHE PATENTANMELDUNG

(11) **EP 3 892 167 A1**
(43) Veröffentlichungstag der Anmeldung: **13.10.2021**
(21) Anmeldenummer: 21165593.1
(22) Anmeldetag: 29.03.2021
(51) Int. Cl.: A47J 27/00, H05B 6/12

(54) **KÜCHENGESCHIRR**

(30) Priorität: 06.04.2020 DE 102020109487
(71) Anmelder: Miele & Cie. KG, 33332 Gütersloh (DE)
(72) Erfinder: Müller, Christoph, 32289 Rödinghausen (DE); Gehring, Nils Marius, 33739 Bielefeld (DE); Wehmeier, Deborah Anna, 32049 Herford (DE)

(57) **Zusammenfassung**

Die Erfindung betrifft ein Küchengeschirr (1) mit einem Bodenkörper (13) mit einer Bodenfläche (14), welche ausgebildet ist, auf einem Untergrund aufgesetzt zu werden, und mit wenigstens einem Induktionselement (2), welches ausgebildet ist, wenigstens mittels induktiver Kopplung elektrische Energie zu erhalten. Das Küchengeschirr (1) ist dadurch gekennzeichnet, dass das Induktionselement (2) zumindest abschnittsweise in der Höhe (Z) unterhalb der Bodenfläche (14) des Bodenkörpers (13) angeordnet ist.

## Beschreibung

Die Erfindung betrifft ein Küchengeschirr gemäß dem Oberbegriff des Patentanspruchs 1.

Der Trend beim heimischen Kochen geht immer weiter dahin, die Durchführung der Kochprozesse für den Benutzer einfacher, komfortabler und bzw. oder sicherer hinsichtlich des gewünschten Kochergebnisses zu gestalten. Hierzu ist es seit längerem bekannt, Temperatursensoren im Kochfeld zu verwenden, um insbesondere für jede Kochstelle eine Restwärme nach einem durchgeführten Garprozess dort ermitteln und dem Benutzer als Warnung anzeigen zu können.

Ein Garprozess bzw. ein Kochprozess kann auch dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und bzw. oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Die Druckschrift DE 10 2008 051 265 A1 betrifft ein Gargerät, insbesondere einen Schnellkochtopf, mit einer Steuerungs-, Regelungs- und Bedienvorrichtung mit zumindest einer Sensoreinrichtung zur Erfassung von zumindest einem, einen Garvorgang beeinflussenden Parameter, mit zumindest einem Mikrokontroller zur Datenverarbeitung und Steuerung/Regelung von Garprozessen, mit zumindest einem Datenspeicher zum Speichern von Ablaufprogrammen, von Geräteparametern auch umgebender für den Garprozess relevanter Geräte, von Garguttypen und Garguttypenparametern und zur Dokumentation von Garprozessen für eine spätere Auswertung und Optimierung derselben, mit zumindest einer Datenschnittstelleneinrichtung, mit zumindest einem elektrischen Energiespeicher zur Energieversorgung, mit zumindest einer Kopplungseinrichtung zur lösbaren Verbindung der Steuerungs-, Regelungs- und Bedienvorrichtung mit dem Gargerät, mit zumindest einer Ausgabeeinrichtung zur Information eines Benutzers, und mit zumindest einer Eingabeeinrichtung zur Bedienung der Steuerungs-, Regelungs- und Bedienvorrichtung.

Die Stromversorgung der Steuerungs-, Regelungs- und Bedienvorrichtung kann beispielsweise durch eine Batterie, durch ein Thermoelement, durch induktive Kopplung wie z. B. im Falle eines Induktionsherdes oder durch einen Akku gewährleistet werden. Im Falle der Verwendung eines Akkus kann die Aufladung über eine Datenschnittstelleneinrichtung des Gargeräts, so z. B. über eine stromführende Leitung eines USB-Anschlusses, oder optional in einer separaten Ladestation vorgenommen werden.

Nachteilig ist bei der Verwendung einer Batterie, dass die gespeicherte elektrische Energie der auswechselbaren Batterie endlich ist und durch den bestimmungsgemäßen Betrieb des elektronischen Bratpfannensystems verbraucht wird. Ab einem gewissen niedrigen Maß an gespeicherter elektrischer Energie bzw. bei ausreichend verbrauchtem bzw. entleertem auswechselbaren elektrischen Energiespeicher können die elektronischen Elemente des Gargeräts der Druckschrift DE 10 2008 051 265 A1 somit nicht mehr betrieben und vom Benutzer genutzt werden. Hierzu muss der Benutzer die leere Batterie gegen eine ausreichend aufgeladene Batterie austauschen, was Aufwand bedeuten und Zeit sowie Geld für die Anschaffung der Batterie kosten kann.

Nachteilig ist bei der Verwendung eines Akku als elektrischen Energiespeicher bei der Steuerungs-, Regelungs- und Bedienvorrichtung der Druckschrift DE 10 2008 051 265 A1, dass auch dieser vom Benutzer wieder aufzuladen ist, falls die gespeicherte elektrische Energie verbraucht ist. Dies kann für den Benutzer einen lästigen Aufwand bedeuten.

Nachteilig ist bei der Verwendung eines Akku oder einer auswechselbaren Batterie als elektrischer Energiespeicher allgemein, dass die elektronischen Funktionen des Gargeräts der Druckschrift DE 10 2008 051 265 A1 solange nicht dem Benutzer zur Verfügung stehen, bis die Batterie ausgetauscht bzw. der Akku ausreichend aufgeladen ist. Dies kann die Verfügbarkeit einschränken.

Nachteilig ist bei der Steuerungs-, Regelungs- und Bedienvorrichtung der Druckschrift DE 10 2008 051 265 A1, dass eine thermoelektrische Energieerzeugung technisch aufwendig und entsprechend teuer sein kann.

Nachteilig ist bei der induktiven Kopplung eines Induktionsherdes gemäß der Druckschrift DE 10 2008 051 265 A1, dass das Gargerät ausgebildet sein muss, induktiv elektrische Energie zum Betrieb der elektronischen Elemente zu erhalten. Auch muss der Induktionsherd entsprechend ausgebildet sein. Dies kann einen nicht unerheblichen Aufwand darstellen.

Ferner können nur geeignete Induktionsherde und Gargeschirre miteinander hierzu verwendet werden. Auch kann die induktive Energieversorgung lediglich beim induktiven Beheizen des Gargeschirrs zum direkten Betreiben der elektronischen Elemente der Steuerungs-, Regelungs- und Bedienvorrichtung der Druckschrift
DE 10 2008 051 265 A1 verwendet werden.

Die Versorgung eines Küchengeschirrs mittels induktiver Kopplung mit elektrischer Energie ist auch aus den Druckschriften WO 2014/056786 A1 und WO 2010/080738 A1 bekannt, bei denen eine Spule zur Aufnahme des elektrischen Wechselfeldes entweder vollständig im metallischen Bodenkörper des Küchengeschirrs angeordnet ist oder vollständig außerhalb des metallischen Bodenkörpers angeordnet ist.

Der Erfindung stellt sich somit das Problem, ein Küchengeschirr der eingangs beschriebenen Art bereitzustellen, welches mittels induktiver Kopplung elektrische Energie erhalten und einfacher, kostengünstiger und bzw. oder robuster ausgebildet werden kann als bisher bekannte derartige Küchengeschirre. Zumindest soll eine Alternative zu bekannten derartigen Küchengeschirren geschaffen werden.

Erfindungsgemäß wird dieses Problem durch ein Küchengeschirr mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein Küchengeschirr mit einem Bodenkörper mit einer Bodenfläche, welche bei gebrauchsüblichem abstellen des Küchengeschirrs auf einem Untergrund dem Untergrund zugewandt zu sein, und mit wenigstens einem Induktionselement, welches ausgebildet ist, wenigstens mittels induktiver Kopplung elektrische Energie zu erhalten. Das Küchengeschirr kann jede Art von Küchengeschirren sein, welche in einer Küche zur Zubereitung, zu dessen Vorbereitung und bzw. oder zur Lagerung von Lebensmitteln sowie zum Anrichten zubereiteter Lebensmittel verwendet werden können. Dies können insbesondere Kochtöpfe, Schmortöpfe, Bratpfannen und dergleichen sein. Der Untergrund kann insbesondere eine Kochstelle eines Kochfelds bzw. eines Flächenkochfelds sowie einer beheizbaren Arbeitsplatte oder dergleichen sein, auf welcher das Küchengeschirr mit seiner Bodenfläche aufgesetzt werden kann, um dort bestimmungsgemäß betrieben bzw. benutzt zu werden.

Das erfindungsgemäße Küchengeschirr ist dadurch gekennzeichnet, dass das Induktionselement zumindest abschnittsweise in der Höhe unterhalb der Bodenfläche des Bodenkörpers angeordnet ist. Hierdurch kann mittels des Induktionselements eine induktive Kopplung zu dem Untergrund wie insbesondere zu einem induktiven Kochfeld inklusive eines induktiven Flächenkochfelds ermöglicht werden, um z.B. elektrische Energie zum direkten Betreiben elektronischer Elemente des Küchengeschirrs wie z.B. Sensoren, Anzeigeelemente, Bedienelemente, Steuerungselemente und dergleichen elektrisch versorgen zu können. Zusätzlich oder alternativ kann mittels der induktiven Kopplung auch wenigstens ein elektrischer Energiespeicher wie z.B. ein Kondensator als Kurzzeitenergiespeicher und bzw. oder z.B. ein Akku als Langzeitenergiespeicher mittels der induktiven Kopplung gespeist werden. Zusätzlich oder alternativ kann die induktive Kopplung auch für einen Datenaustausch und insbesondere für ein Pairing verwendet werden, wie weiter unten noch näher beschrieben werden wird.

Ein Aspekt ist es, dass das Induktionselement vollständig auf einer der dem Bodenkörper abgewandten Seite der Bodenfläche angeordnet ist. Hierdurch wird eine besonders gute Kopplung des Induktionselements mit einem elektromagnetischen Wechselfeld erreicht.

Jedoch ist es für den Wirkungsgrad bei der induktiven Erwärmung des Bodenkörpers besonders vorteilhaft, wenn dieser möglichst nahe an einer induktiven Quelle, also nahe an dem Untergrund angeordnet ist. Daher ist erfindungsgemäß vorgesehen, dass das Induktionselement in seiner zur Bodenfläche senkrechten Erstreckung zumindest abschnittsweise auf der dem Bodenkörper zugewandten Seite der Bodenfläche angeordnet und/oder in dem Bodenkörper angeordnet ist. Daraus ergibt sich, dass das Induktionselement in seiner zur Bodenfläche senkrechten Erstreckung auch zumindest abschnittsweise auf der dem Bodenkörper abgewandten Seite der Bodenfläche angeordnet und/oder außerhalb des Bodenkörpers angeordnet ist. Durch die Anordnung, bei der das Induktionselement teilweise über die Bodenfläche des Bodenkörpers hinaus erstreckt ist, kann die Erwärmung des Bodenkörpers verbessert werden, ohne die Aufnahmeleistung des Induktionselements zu sehr einzuschränken.

In jedem Fall kann durch die zumindest teilweise Anordnung des Induktionselements die Nähe zum Untergrund verbessert bzw. eine ausreichende Nähe erreicht werden, um die induktive Kopplung sicherzustellen bzw. zu verbessern und hierdurch die Übertragung elektrischer Energie und bzw. oder Daten effizienter zu machen. Insbesondere kann eine Abschirmung bzw. Reduzierung der induktiven Kopplung durch das Material des Bodenkörpers, welches das Induktionselement umgeben kann, vermieden oder zumindest reduziert werden. In jedem Fall kann die induktive Kopplung und die hierdurch erreichbaren Funktionen verbessert werden.

Vorteilhaft ist auch, dass die zumindest teilweise bzw. abschnittsweise Anordnung des Induktionselements in der Höhe unterhalb der Bodenfläche des Bodenkörpers den konstruktiven Aufwand für die Umsetzung des erfindungsgemäßen Küchengeschirrs geringhalten kann. Dies kann die Herstellung und bzw. oder die Montage ebenso betreffen.

Vorteilhaft ist weiterhin, dass ggfs. geforderte normative Kontaktabstände eingehalten werden können.

Gemäß einem Aspekt der Erfindung ist das Induktionselement abschnittsweise in der Höhe unterhalb der Bodenfläche des Bodenkörpers und abschnittsweise innerhalb des Bodenkörpers angeordnet. Eine entsprechende Aufnahme im Bodenkörper für das Induktionselement des Küchengeschirrs kann dort z.B. durch Gießen, durch Pressen, durch Fräsen und dergleichen ausgebildet sein. Innerhalb dieser Aufnahme im Bodenkörper für das Induktionselement kann das Induktionselement dann zumindest abschnittsweise und vorzugsweise vollständig z.B. eingepresst und bzw. oder verklebt werden, um z.B. einen kraftschlüssigen und bzw. oder stoffschlüssigen Halt zu bewirken.

Ein Aspekt ist es, dass in dem Bodenkörper eine Ausnehmung vorgesehen ist, in welcher eine Induktionsspulenaufnahme und/oder eine Spulenkernaufnahme und/oder das Induktionselement in der Höhe Z zumindest abschnittsweise aufgenommen ist. Hieraus ergeben sich die bereits vorstehend erläuterten Vorteile beim Wirkungsgrad des Heizens und der induktiven Kopplung.

Die Integration von Spulen als Induktionselement an der Unterseite von Gargefäßen basierend auf einer Unterbrechung des ferromagnetischen Bodenmaterials führt zu einem starken Absinken der magnetischen Flussdichte im und um den Bereich der Unterbrechung. Je breiter die Ausnehmung, umso größer das Absinken der Wirkleistung, so dass höhere Eingangsleistungen nötig werden, um dieselben Temperaturen in vergleichbaren Gargefäßen mit intakter ferromagnetischer Schicht zu erreichen.

Eine Unterbringung eines für ein Energy Harvesting vorgesehenen Induktionselements, insbesondere in Form einer Spule, unter der ferromagnetischen Schicht des Gargefäßes führt zu einem vergrößerten Abstand des Gargefäßes zur Induktionsspule des Kochfelds und somit zu einem vergleichbaren Absinken des Wirkungsgrads des Induktionssystems zum Erwärmen des Topfes.

Als Lösung ist vorgesehen, dass eine Ausnehmung erzeugt oder in den Bodenkörper eingebracht wird, ohne dass die ferromagnetische Schicht unterbrochen wird. Dies kann beispielsweise durch ein entsprechendes Urformen, wie beispielsweise Gießen, geschehen.

Die Ausnehmung in dem Bodenkörper ist vorzugsweise durch einen umformenden Arbeitsprozess, insbesondere durch Prägen oder Pressen, hergestellt bzw. in dem Bodenkörper eingebracht. Dies hat sich als besonders günstig erwiesen, da hierdurch das auf das Induktionselement wirkende Wechselfeld am geringsten vom Bodenkörper beeinflusst wird. Dies hat seine Ursache darin, dass der Bodenkörper in seiner Struktur durch eine Umformung weniger verändert wird als beispielsweise bei einem spanabhebenden Arbeitsprozess wie dem Fräsen.

Hierdurch können zum einen die zuvor beschriebenen Eigenschaften und Vorteile zumindest teilweise erreicht werden. Zum anderen kann der Halt des Induktionselements an bzw. in der Bodenfläche des Bodenkörpers verbessert werden. Auch können die Kontaktabstände gemäß der Norm EN60335 sichergestellt werden.

Gemäß einem weiteren Aspekt der Erfindung ist das Induktionselement als Induktionsspule ausgebildet, wobei die Induktionsspule einen elektrisch leitfähigen Spulenkern und einen elektrisch isolierenden Spulenmantel aufweist, welcher den Spulenkern der Bodenfläche des Bodenkörpers abgewandt umgibt. Dies kann eine einfache, kostengünstige und bzw. oder robuste Art und Weise der Umsetzung eines Induktionselements darstellen. Insbesondere kann eine großflächige Einkopplung durch die Wahl der Kontur und bzw. oder der Größe der Induktionsspule erreicht werden, was die induktive Kopplung verbessern kann. Die Kontur der Induktionsspule kann insbesondere kreisförmig aber auch rechteckig, oval und dergleichen sein, je nach Anwendungsfall und Küchengeschirr bzw. Untergrund. Der Spulenkern kann insbesondere aus Metall wie z.B. aus Kupfer und bzw. oder der Spulenmantel aus einem Kunststoff sein. Das Material und insbesondere der Kunststoff des Spulenmantels kann insbesondere hitzebeständig sein.

Die Induktionsspule kann auch als Induktionselement oder gemäß ihrer zumindest wesentlichen Funktion auch als Ladespule bzw. als Energy-Harvesting-Spule bezeichnet werden. Der Begriff Induktionsspule beschränkt sich nicht auf den elektrisch leitfähigen Spulenkörper, auch Spulenkern genannt, sondern umfasst auch elektrisch isolierende Elemente, beispielsweise einen Spulenmantel und eine Spulenkernabdeckung. Die Induktionsspule kann in Teilen oder vollständig als Baugruppe vorgefertigt sein und als Teilbaugruppe oder vollständig Baugruppe mit dem Küchengeschirr verbunden zu werden. Es ist alternativ oder ergänzend möglich die Induktionsspule mit einigen ihrer Teile oder allen Bestandteilen an dem Boden des Küchengeschirrs aufzubauen.

Gemäß einem Aspekt der Erfindung ist die Spulenkernabdeckung als eine keramische Beschichtung der Spule oder der Bodenfläche des Küchengeschirrs einschließlich der Spule ausgeführt. Die keramische Beschichtung wird vorzugsweise durch Emaillieren, Flammspritzen und/oder Sputtern aufgebracht. Dabei ist es möglich, dass die keramische Beschichtung aus einer oder aus mehreren Schichten besteht. Mehrere Schichten werden vorzugsweise in separaten Verfahrensschritten aufgetragen. Vorzugsweise ist die keramische Beschichtung frei von Metallen und/oder magnetisch neutral. Im Sinne dieser Erfindung ist die magnetische Neutralität der keramische Beschichtung eine magnetische Permeabilität mit einer Permeabilitätszahl im Bereich von 10^{∧}-9 bis 100.

Gemäß einem weiteren Aspekt der Erfindung weist der Spulenmantel eine Spulenkernaufnahme auf, welche in der Höhe der Bodenfläche des Bodenkörpers zugewandt ausgerichtet und in welcher der Spulenkern angeordnet ist. Mit anderen Worten kann der Spulenmantel in der Höhe zu der Seite, welche beim bestimmungsgemäßen Gebrauch des Küchengeschirrs auf dem Untergrund aufgesetzt wird, geschlossen ausgebildet sein, um den Spulenkern nach außen hin vollständig abzudichten und zu schützen. Dies kann eine Spühlmaschinentauglichkeit des Küchengeschirrs bewirken. Von der gegenüberliegenden Seite kann der Spulenmantel mittels der Spulenkernaufnahme ausreichend offen ausgebildet sein, so dass der Spulenkern von dieser Seite in dem Spulenmantel angeordnet und dort ggfs. gehalten werden kann, wie weiter unten noch näher beschrieben werden wird.

Gemäß einem weiteren Aspekt der Erfindung wird der Spulenkern stoffschlüssig, vorzugsweise durch Kleben, und bzw. oder kraftschlüssig und bzw. oder formschlüssig, vorzugsweise durch das Hintergreifen von Halteelementen des Spulenmantels, in der Spulenkernaufnahme gehalten. Dies kann jeweils einen einfachen, kostengünstigen und bzw. oder sicheren Halt des Spulenkerns innerhalb der Spulenkernaufnahme des Spulenmantels für die Montage, insbesondere für einen Zwischenschritt der Montage, und bzw. oder für die bestimmungsgemäße Verwendung des Küchengeschirrs bewirken. Die Halteelemente können insbesondere als einander gegenüberliegende bzw. gegenläufige Rasthaken umgesetzt sein.

Gemäß einem weiteren Aspekt der Erfindung weist die Induktionsspule eine elektrisch isolierende Spulenkernabdeckung auf, welche die Spulenkernaufnahme in der Höhe der Bodenfläche des Bodenkörpers zugewandt zumindest abschnittsweise abdeckt. Die Spulenkernabdeckung kann aus demselben Material wie der Spulenmantel und insbesondere aus Kunststoff bestehen sowie vorzugsweise hitzebeständig ausgebildet sein. In jedem Fall können der Spulenmantel und die Spulenkernabdeckung vorzugsweise mittels Kleben miteinander verbunden sein, so dass der Spulenkern im Inneren der einteiligen Induktionsspule gehalten und positioniert werden kann. Die Spulenkernabdeckung kann zumindest teilweise innerhalb der entsprechenden Aufnahme im Bodenkörper für das Induktionselement des Küchengeschirrs angeordnet und aufgenommen sein, was den Halt verbessern kann. Insgesamt kann dies die Montage des Induktionselements an sich und bzw. oder des Induktionselements gegenüber dem Küchengeschirr verbessern, vereinfachen und bzw. oder beschleunigen.

Gemäß einem weiteren Aspekt der Erfindung sind die Spulenkernabdeckung innerhalb des Bodenkörpers und der Spulenmantel in der Höhe unterhalb der Bodenfläche des Bodenkörpers angeordnet. Dies kann den Halt des Induktionselements gegenüber dem Küchengeschirr verbessern und bzw. oder die Montage des Induktionselements gegenüber dem Küchengeschirr vereinfachen und bzw. oder beschleunigen.

Gemäß einem weiteren Aspekt der Erfindung ist der Spulenmantel in der Höhe an der Bodenfläche des Bodenkörpers anliegend angeordnet. Dies kann die Kontaktfläche zwischen dem Induktionselement bzw. dessen Spulenmantel und der Bodenfläche des Bodenkörpers des Küchengeschirrs vergrößern und hierdurch den Halt in der Höhe verbessern. Zusätzlich oder alternativ kann dies das Einfügen des Induktionselements bzw. dessen Spulenkernabdeckung in die entsprechende Aufnahme im Bodenkörper für das Induktionselement des Küchengeschirrs begrenzen, was dessen Positionierung und bzw. oder Montage vereinfachen, verbessern und bzw. oder beschleunigen kann.

Gemäß einem weiteren Aspekt der Erfindung weist der Spulenmantel zumindest abschnittsweise eine geschlossene Durchgangsöffnung auf, in welche der Spulenkern eingeschoben ist. Dies kann zumindest abschnittweise bis vollständig eine alternative Art der Anordnung des Spulenkerns gegenüber dem Spulenmantel darstellen, bei welcher der Spulenkern senkrecht bzw. radial zu seiner länglichen Erstreckungsrichtung zumindest abschnittweise vollständig von dem Spulenmantel umgeben und entsprechend vollständig und wirkungsvoll geschützt sein kann.

Gemäß einem weiteren Aspekt der Erfindung weist das Küchengeschirr wenigstens ein Standelement, vorzugsweise einen Kunststoffring oder eine Außenprägung, auf, welches in der Höhe unterhalb der Bodenfläche des Bodenkörpers angeordnet ist und sich in der Höhe gleichweit wie das Induktionselement erstreckt, wobei das Standelement vorzugsweise das Induktionselement umgibt. Mit anderen Worten kann das Küchengeschirr, vorzugsweise randseitig relativ zum Induktionselement, mittels wenigstens eines Standelement derart ausgebildet sein, dass auch dort ein Kontakt zum Untergrund ermöglicht und somit die Standfläche des Küchengeschirrs auf dem Untergrund vergrößert wird. Dies kann die Standfestigkeit des Küchengeschirrs beim bestimmungsgemäßen Gebrauch erhöhen und insbesondere ein Kippen, Kippeln bzw. Wackeln des Küchengeschirrs beim bestimmungsgemäßen Gebrauch verhindern oder zumindest reduzieren.

Dies kann insbesondere durch einen randseitigen Kunststoffring einfach, kostengünstig und bzw. oder wirkungsvoll erreicht werden. Das Standelement als Kunststoffring kann insbesondere aus einem hitzebeständigen Kunststoff, vorzugsweise aus demselben Material wie der Spulenmantel der Induktionsspule, bestehen oder dieses zumindest aufweisen.

Alternativ kann das Standelement durch eine in der Höhe nach unten zeigende Außenprägung des Bodenkörpers des Küchengeschirrs umgesetzt werden, was ggfs. den Aufwand der Herstellung reduzieren kann, da kein zusätzliches Standelement hergestellt und montiert werden muss. Somit kann die Ausprägung eine einstückige Ausbildung von Standelement und Bodenkörper ermöglichen, was die Haltbarkeit erhöhen kann. Ferner kann mittels der einstückigen Ausprägung eine Temperaturübertragung über z.B. die Glaskeramik eines induktiven Kochfelds zu einem Temperatursensor wie z.B. zu einem NTC-Sensor eines Generators des induktiven Kochfelds sichergestellt werden, z.B. um die maximale ÖlTemperatur im Sinne der Norm EN60335 zu begrenzen.

Gemäß einem weiteren Aspekt der Erfindung ist das Induktionselement als Induktionsspule ausgebildet, wobei die Induktionsspule einen elektrisch leitfähigen Spulenkern und eine elektrisch isolierende flächige Abdeckung aufweist, welche den Spulenkern der Bodenfläche des Bodenkörpers abgewandt umgibt, wobei die flächige Abdeckung in der Höhe an der Bodenfläche des Bodenkörpers anliegend angeordnet ist. Somit kann alternativ der Spulenkern gegenüber dem Untergrund flächig abgeschlossen bzw. abdeckt und hierdurch eine entsprechende großflächige ebene Aufsetzfläche des Küchengeschirrs geschaffen werden, was die Standfestigkeit erhöhen kann. Die flächige Abdeckung ist vorzugsweise in ihrer Geometrie der Form des Küchengeschirrbodens angepasst und kann eine polygone oder ovale oder runde Gestalt aufweisen. Bei einer polygonen Form können einzelne oder alle Ecken spitz oder abgerundet ausgeführt sein.

Gemäß einem weiteren Aspekt der Erfindung weist die Induktionsspule einen Induktionsspulenanschluss auf, welcher den Spulenkern aufnimmt und einem Griffelement des Küchengeschirrs zuführt, wobei der Induktionsspulenanschluss zumindest abschnittsweise in den Bodenkörper eingelassen verläuft. Dies kann eine elektrisch leitfähige Verbindung des Spulenkerns mit elektronischen Elementen des Küchengeschirrs ermöglichen, welche platzsparend und bzw. oder thermisch gegenüber dem Bodenkörper beabstandet in wenigstens einem Griffelement des Küchengeschirrs angeordnet sein können, wo sie z.B. als Anzeige- und bzw. oder Bedienelemente besonders gut vom Benutzer erreicht bzw. betrachtet werden können. Dabei den Induktionsspulenanschluss zumindest abschnittsweise in den Bodenkörper eingelassen verlaufen zu lassen kann die Zuführung verbessern und insbesondere einen geradlinigen Verlauf ermöglichen. Auch kann dies die Zuführung des Spulenkerns zum Griffelement optisch für den Benutzer verschwinden lassen und hierdurch eine optische Störung vermeiden.

Gemäß einem weiteren Aspekt der Erfindung ist die Induktionsspule konzentrisch zu einem Mittelpunkt der Bodenfläche des Bodenkörpers ausgebildet und angeordnet. Dies kann die Wirkung der Induktionsspule erhöhen. Auch kann dies die Kompatibilität des erfindungsgemäßen Küchengeschirrs mit unterschiedlichen Untergründen wie insbesondere mit unterschiedlichen Kochfeldern desselben Herstellers und insbesondere unterschiedlicher Hersteller sicherstellen, da üblicherweise die induktiven Heizspulen sowie ggfs. zusätzliche induktiv energie- und bzw. oder datenübertragungsfähige Spulen bei z.B. einem Kochfeld ebenfalls mittig konzentrisch zu der jeweiligen Kochstelle oder dergleichen angeordnet sind.

Gemäß einem weiteren Aspekt der Erfindung weist das Küchengeschirr wenigstens ein Sensorelement, vorzugsweise einen Temperatursensor, auf, welcher innerhalb des Bodenkörpers angeordnet ist. Dies kann die Kombination der Funktionen derartiger Sensorelement mit den zuvor beschriebenen Eigenschaften und Vorteilen des Induktionselements ermöglichen.

Gemäß einem weiteren Aspekt der Erfindung ist das Induktionselement ferner ausgebildet, einen einseitigen, vorzugsweise einen beidseitigen, Datenaustausch zu ermöglichen. Insbesondere kann hierdurch ein Pairing ermöglicht werden. In jedem Fall kann der Datenaustausch einseitig von dem Untergrund wie z.B. von einem Kochfeld bzw. von einer Kochstelle eines Kochfelds in Richtung Küchengeschirr oder umgekehrt erfolgen. Auch kann ein Datenaustausch in beide Richtungen erfolgen, was den Aufwand und die Kosten erhöhen jedoch die Möglichkeiten des Datenaustausches sowie der Verwendung der ausgetauschten Daten erweitern kann.

Mehrere Ausführungsbeispiele der Erfindung sind in den Zeichnungen rein schematisch dargestellt und werden nachfolgend näher beschrieben. Es zeigt
- Figur 1: eine perspektivische Darstellung eines erfindungsgemäßen Küchengeschirrs gemäß eines ersten Ausführungsbeispiels von schräg oben;
- Figur 2: die Darstellung der Figur 1 von schräg unten;
- Figur 3: eine Detailansicht der Darstellung der Figur 1 von schräg unten;
- Figur 4: einen Querschnitt des erfindungsgemäßen Küchengeschirrs gemäß des ersten Ausführungsbeispiels;
- Figur 5: eine Detailansicht der Darstellung der Figur 4;
- Figur 6: eine Seitenansicht des erfindungsgemäßen Küchengeschirrs gemäß des ersten Ausführungsbeispiels;
- Figur 7: eine Detailansicht des Griffübergangs der Darstellung der Figur 6;
- Figur 8: eine perspektivische Darstellung eines erfindungsgemäßen Küchengeschirrs gemäß eines zweiten Ausführungsbeispiels von schräg unten;
- Figur 9: einen Querschnitt des erfindungsgemäßen Küchengeschirrs gemäß des zweiten Ausführungsbeispiels;
- Figur 10: eine Detailansicht der Darstellung der Figur 9;
- Figur 11: eine weitere Detailansicht der Darstellung der Figur 1 von schräg unten;
- Figur 12: eine detaillierte Seitenansicht des Griffübergangs des erfindungsgemäßen Küchengeschirrs gemäß des zweiten Ausführungsbeispiels;
- Figur 13: eine Draufsicht auf ein Induktionselement;
- Figur 14: eine perspektivische Darstellung eines kleineren Details des Induktionselements von oben;
- Figur 15: eine perspektivische Darstellung eines größeren Details des Induktionselements von oben;
- Figur 16: eine perspektivische Darstellung eines Induktionselements mit Sensorelement von oben;
- Figur 17: eine perspektivische Darstellung eines erfindungsgemäßen Küchengeschirrs gemäß eines dritten Ausführungsbeispiels von schräg unten; und
- Figur 18: eine perspektivische Darstellung einer flächigen Abdeckung des Induktionselements von oben.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

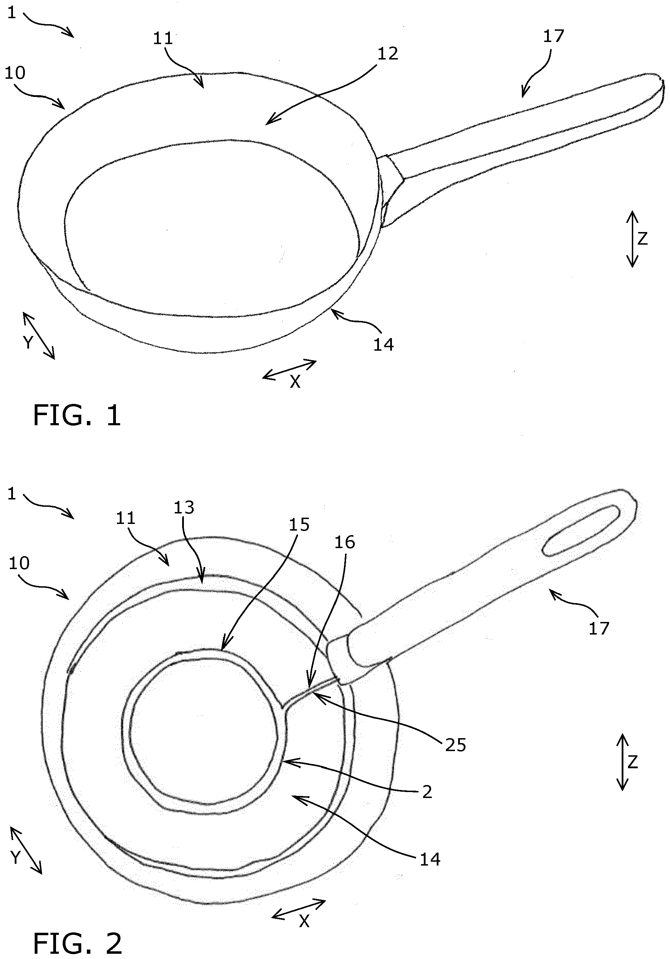

Betrachtet wird ein erfindungsgemäßes Küchengeschirr 1 in Form eines Gargeschirrs 1 als Pfanne 1. Die Pfanne 1 weist einen Küchengeschirrkörper 10 in Form eines Gargeschirrkörpers 10 als Pfannenkörper 10 auf. Der Pfannenkörper 10 selbst ist kreisförmig ausgebildet und kann eine schräge in der Höhe Z nach oben ragende Wandung 11 aufweisen, welche sich von einem Bodenkörper 13 randseitig wegerstreckt. Die in der Höhe Z obere Fläche bzw. Innenfläche (nicht bezeichnet) und die Wandung 11 bilden dabei einen Aufnahmeraum 12 bzw. einen Garraum 12, siehe z.B. Figur 1, in welchem zuzubereitende Lebensmittel aufgenommen werden können, um in diesem Fall einer Pfanne 1 gebraten zu werden.

Dem Garraum 12 in der Höhe Z gegenüberliegend weist der Bodenkörper 13, welcher massiv, d.h. deutlich dicker als die Wandung 11, und aus einem ferromagnetischen Metall ausgebildet ist, eine kreisförmige ebene Bodenfläche 14 auf, welche ausgebildet ist, auf z.B. einer Kochstelle eines induktiven Kochfelds aufgesetzt und induktiv beheizbar betrieben zu werden. Von der Wandung 11 erstreckt sich seitlich in der Tiefe X bzw. radial sowie in der Höhe Z nach schräg oben ein Griffelement 17 in Form eines Griffs 17, mit dem die Pfanne 1 von einem Benutzer gehandhabt werden kann.

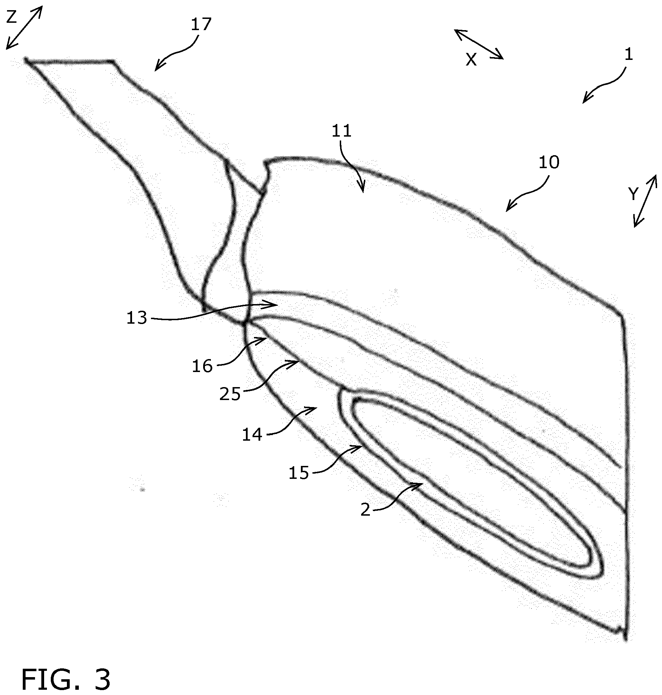

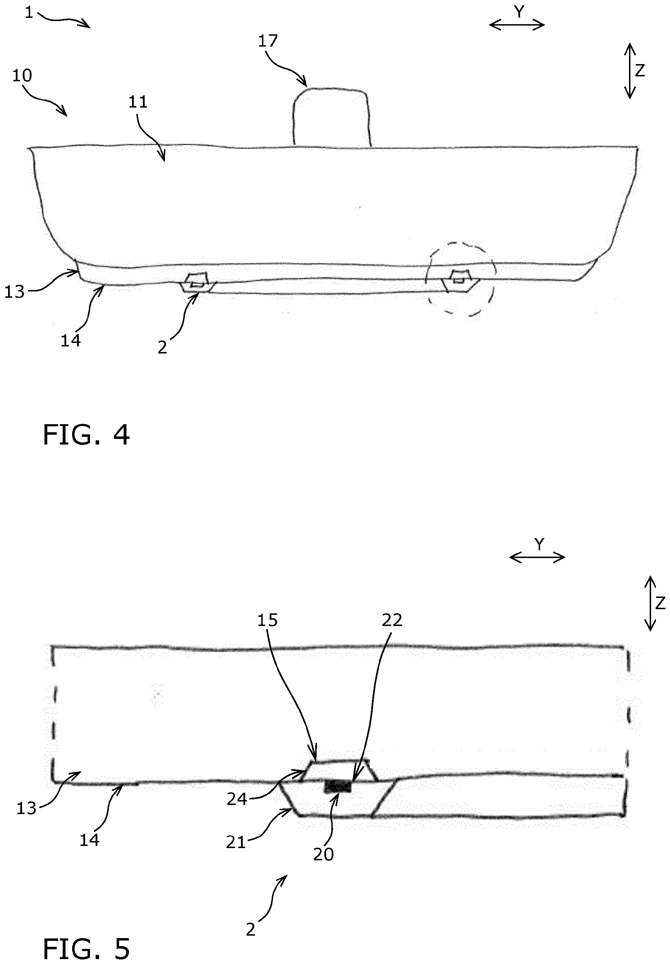

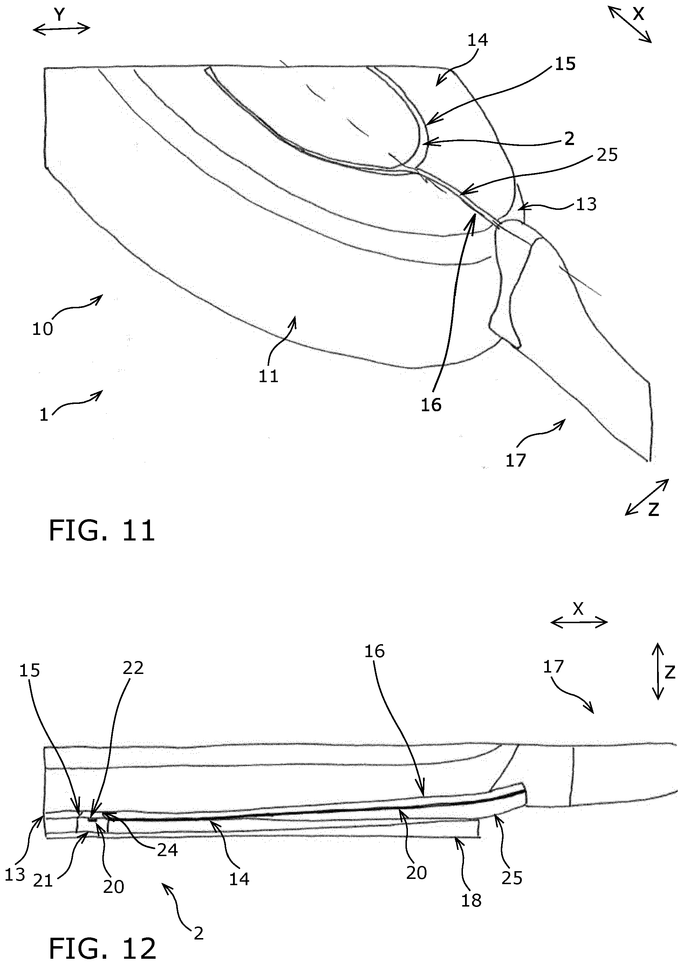

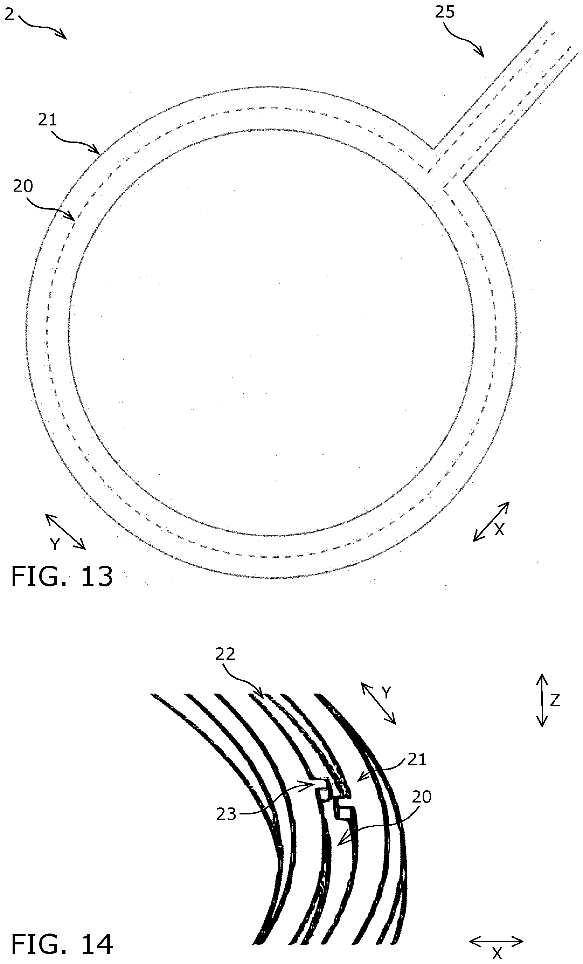

Die Pfanne 1 weist ferner ein Induktionselement 2 in Form einer Induktionsspule 2 auf, siehe z.B. Figur 13, welche gemäß ihrer zumindest wesentlichen Funktion auch als Ladespule 2 bzw. als Energy-Harvesting-Spule 2 bezeichnet werden kann. Die Induktionsspule 2 weist gemäß des ersten und zweiten Ausführungsbeispiels der Figuren 1 bis 16 einen Spulenmantel 21 aus einem hitzebeständigen Kunststoff auf, in dessen Spulenkernaufnahme 22 in der Höhe Z von oben ein metallischer Spulenkern 20 eingelassen ist, siehe z.B. Figuren 5 und 14. Der Spulenkern 20 wird beispielsweise durch Halteelemente 23 in Form von einander gegenüberliegenden bzw. gegenläufigen Rasthaken 23 in der Spulenkernaufnahme 22 gehalten. Innerhalb der Spulenkernaufnahme 22 kann der Spulenkern 20 eingelegt und/oder eingeklemmt und/oder mittels Klebstoff fixiert werden.

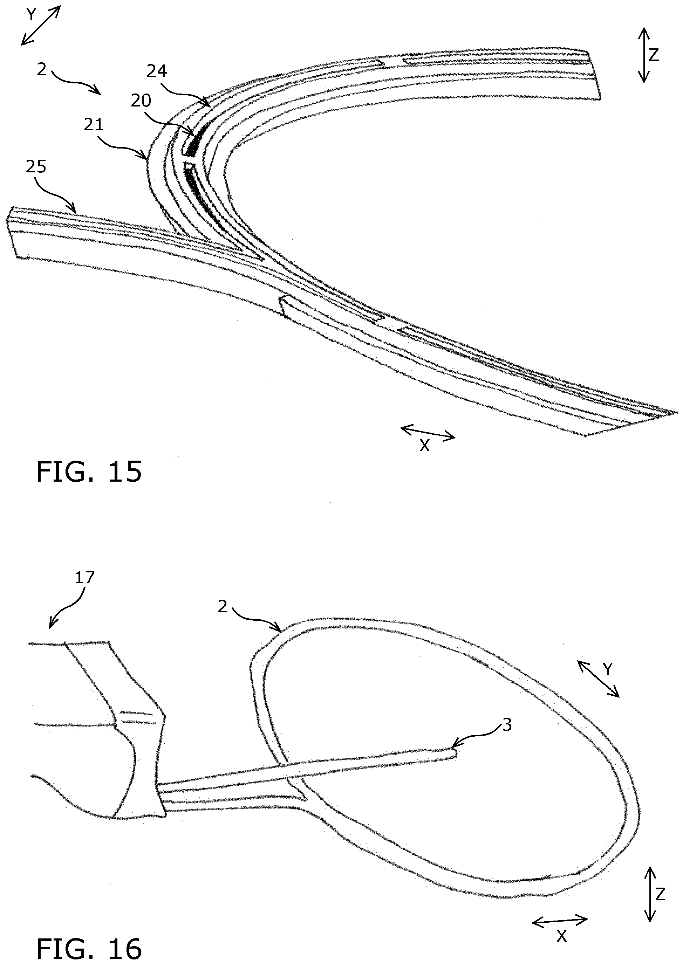

In der Höhe Z anschließend wird der Spulenkern 20 bzw. die Spulenkernaufnahme 22 von einer Spulenkernabdeckung 24 im Wesentlichen abgedeckt. Die Spulenkernabdeckung 24 ist dabei senkrecht zu ihrer länglichen Erstreckung schmaler als der Spulenmantel 21 ausgebildet, siehe z.B. Figur 15. Die Spulenkernabdeckung 24 ist vorzugsweise stoffschlüssig, mittels Klebstoff oder mittels Anspritzen, mit dem Spulenmantel 21 verbunden, so dass die Induktionsspule 2 einteilig ausgebildet ist, was die Montage vereinfachen kann.

Die Induktionsspule 2 bildet ferner einen Induktionsspulenanschluss 25 aus, welcher sich im Wesentlichen senkrecht zur übrigen Induktionsspule 2 zum Griff 17 der Pfanne 1 hin erstreckt, siehe z.B. Figuren 2, 3, 12, 15, und 16. In der Höhe Z oberhalb der Induktionsspule 2 erstreckt sich ein Sensorelement 3 in Form eines Temperatursensors 3 von dem Griff 17 der Pfanne 1 zum Mittelpunkt der kreisrunden Induktionsspule 2.

Die Induktionsspule 2 ist mit ihren kreisförmigen Bereich in eine korrespondierende Induktionsspulenaufnahme 15 der Bodenfläche 14 des Bodenkörpers 13 eingelassen, siehe z.B. Figur 2. Dabei wird die Spulenabdeckung 24 vollkommen von der Induktionsspulenaufnahme 15 der Bodenfläche 14 des Bodenkörpers 13 aufgenommen, siehe z.B. Figur 5. Die Spulenabdeckung 24 kann hierzu in die Induktionsspulenaufnahme 15 der Bodenfläche 14 des Bodenkörpers eingepresst werden, was durch eine Fase bzw. durch eine trapezförmige Kontur des Querschnitts der Spulenkernabdeckung 24 begünstigt werden kann, siehe z.B. Figur 5.

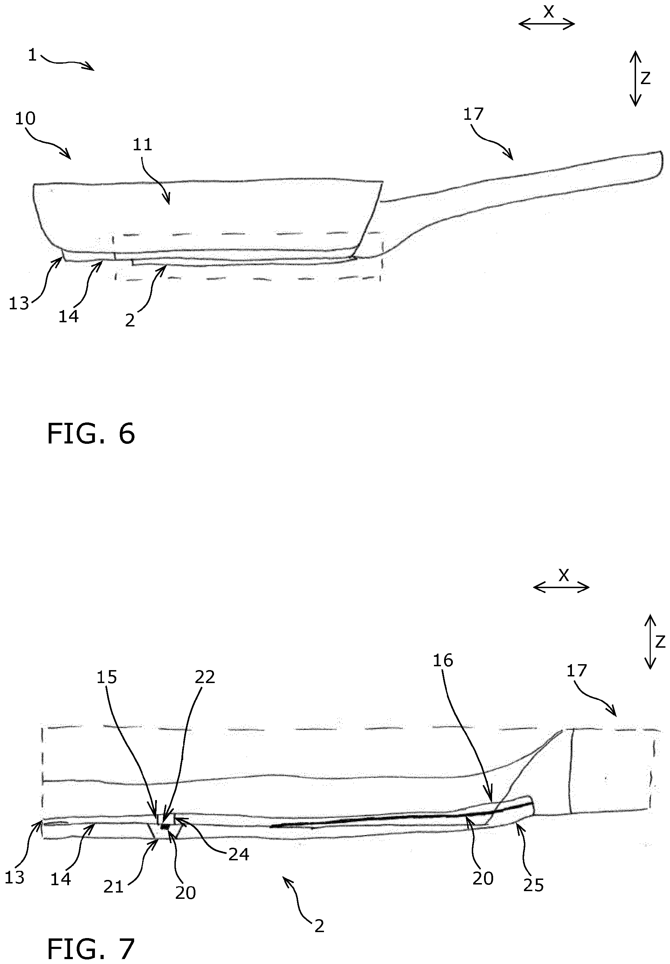

Der Spulenmantel 21 samt Spulenkern 20 ist in der Höhe Z unterhalb der Bodenfläche 14 des Bodenkörpers 13 angeordnet, so dass eine induktive Kopplung z.B. eines induktiven Kochfelds mit der Induktionsspule 2 bzw. mit dessen Spulenkern 20 nicht durch das Material des Bodenkörpers 13 der Pfanne 1 gestört werden kann. Dabei liegt die Oberseite des Spulenmantels 21 (nicht bezeichnet) mit ihren Rand an der Bodenfläche 14 des Bodenkörpers 13 an, siehe z.B. Figuren 5 und 15, was den Halt und die Positionierung verbessern kann. Der Induktionsspulenanschluss 25 verläuft vergleichsweise in einer Griffelementzuführung 16 der Bodenfläche 14 des Bodenkörpers 13, siehe z.B. Figur 7.

Zur Montage der Induktionsspule 2 kann die gesamte Induktionsspule 2, mit Spulenkern 20, Spulenmantel 21, Spulenkernaufnahme 22 und Spulenkernabdeckung 24 als eine Baugruppe in dem Bodenkörper 13 befestigt werden.

Auch andere Montageverfahren sind möglich, beispielsweise kann der Spulenmantel 21 mit seiner geschlossenen unteren Seite auf eine ebene Oberfläche gelegt werden. Dann kann der Spulenkern 20 in der Höhe Z von oben in die Spulenkernaufnahme 22 eingelegt bzw. eingedrückt und dabei von den Rasthaken 23 gehalten werden, siehe z.B. Figur 14. Ein zuvor in die Spulenkernaufnahme 22 eingefüllter Klebstoff kann sich nun mit dem Spulenkern 20 verbinden und aushärten. Anschließend kann die Spulenkernabdeckung 24 ihrerseits in der Höhe Z von oben auf den Spulenmantel 21 aufgeklebt werden.

Sind die Klebstoffe der Induktionsspule 2 ausgehärtet, so kann die Pfanne 1 in der Höhe Z umgedreht werden, so dass die Bodenfläche 14 des Bodenkörpers 13 nach oben zeigt. Die Induktionsspule 2 kann nun mit ihrer Spulenkernabdeckung 24 in die Induktionsspulenaufnahme 15 eingedrückt bzw. eingepresst werden, was mit Hilfe einer Platte erfolgen kann. Das Einfügen der Spulenkernabdeckung 24 in die Induktionsspulenaufnahme 15 kann durch eine Fase oder eine trapezförmige Kontur der Spulenkernabdeckung 24 erleichtert werden, wie bereits zuvor erwähnt. Dies kann auch die Positionierung vereinfachen bzw. verbessern.

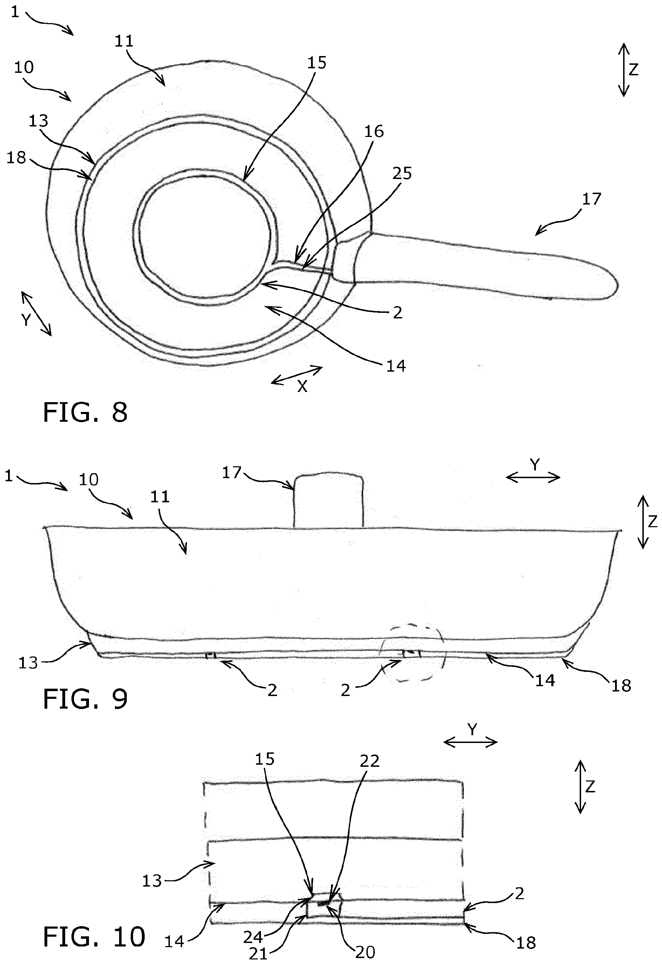

Um ein Kippen und dergleichen zu vermeiden, weist die Pfanne 1 gemäß dem zweiten Ausführungsbeispiel der Figuren 8 bis 10 und 12 randseitig an der Bodenfläche 14 des Bodenkörpers 13 ein Standelement 18 in Form eines Kunststoffrings 18 auf, welches ebenfalls aus einem hitzebeständigen Kunststoff besteht und in der Höhe Z gleichhoch wie die Induktionsspule 2 ausgebildet ist. Hierdurch kann ein flächiger gleichmäßiger Stand auf dem Untergrund ermöglicht werden. Alternativ könnte auch der Bodenkörper 13 randseitig kreisringförmig umlaufend eine Außenprägung in der Höhe Z nach unten hin aufweisen.

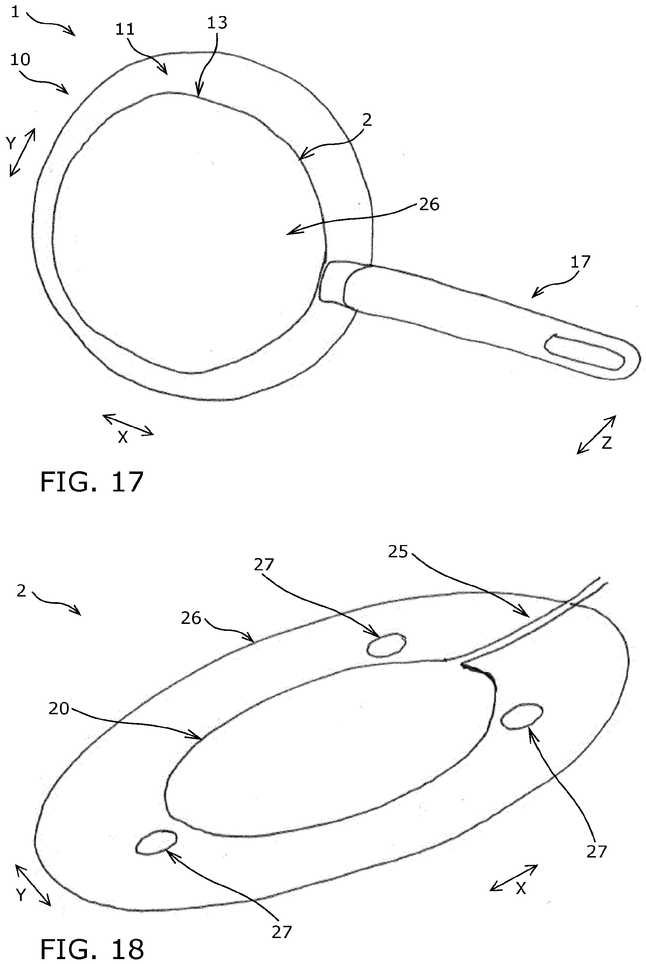

Gemäß dem dritten Ausführungsbeispiel der Figuren 17 und 18 wird der Spulenkern 20 anstelle von einem ringförmigen Spulenmantel 21 von einer kreisrunden flächigen Abdeckung 26 aufgenommen. Die flächige Abdeckung 26 besteht aus einem hitzebeständigen Kunststoff und ist in der Höhe Z nach unten hin vollkommen eben ausgebildet, was die Standfestigkeit auf dem Untergrund begünstigen kann. Radial schließt die flächige Abdeckung 26 mit ihrem Rand mit dem Rand des Bodenkörpers 13 der Pfanne 1 ab, siehe z.B. Figur 17.

Gemäß einer anderen hier nicht gezeigten Ausführungsform schließt die flächige Abdeckung 26 nicht mit dem Rand des Bodenkörpers 13 ab, sondern umgibt diesen. Dabei ist die flächige Abdeckung 26 auch über zumindest einen unteren, dem Bodenkörper 13 zugewandten Abschnitt der Wandung 11 erstreckt.

In der Höhe Z auf der gegenüberliegenden inneren Seite der flächigen Abdeckung 26 weist diese gemäß Ausführungsbeispiel drei Arretierungselemente 27 in Form von kreisrunden Erhebungen auf, welche in der Umfangsrichtung, betrachtet zum Mittelpunkt der flächigen Abdeckung 27, ungleichmäßig versetzt derart angeordnet sind, so dass eine verdrehsichere Montage des Induktionsspulenanschlusses 25 in der Griffelementzuführung 15 der Pfanne 1 erfolgen kann, siehe z.B. Figur 18. Die drei kreisrunden Erhebungen können dabei in korrespondierende Aussparungen der Bodenfläche 14 des Bodenkörpers 13 der Pfanne 1 eingreifen und hierdurch einen sicheren Halt durch Verkleben begünstigen sowie die verdrehsichere Positionierung sicherstellen.

### Bezugszeichenliste (Bestandteil der Beschreibung)

- X: Längsrichtung; Tiefe; Länge
- Y: Querrichtung; Breite
- Z: vertikale Richtung; Höhe

- 1: Küchengeschirr; Gargeschirr; Pfanne
- 10: Küchengeschirrkörper; Gargeschirrkörper; Pfannenkörper
- 11: Wandung
- 12: Aufnahmeraum; Garraum
- 13: Bodenkörper
- 14: Bodenfläche
- 15: Induktionsspulenaufnahme
- 16: Griffelementzuführung
- 17: Griffelement; Griff
- 18: Standelement; Kunststoffring

- 2: Induktionselement; Induktionsspule; Ladespule; Energy-Harvesting-Spule
- 20: Spulenkern
- 21: Spulenmantel
- 22: Spulenkernaufnahme
- 23: Halteelemente; Rasthaken
- 24: Spulenkernabdeckung
- 25: Induktionsspulenanschluss
- 26: flächige Abdeckung
- 27: Arretierungselemente

- 3: Sensorelement; Temperatursensor

## Patentansprüche

1. Küchengeschirr (1)
mit einem metallischen Bodenkörper (13) mit einer Bodenfläche (14), wobei die Bodenfläche (14) den Bodenkörper (13) begrenzt, und
mit wenigstens einem Induktionselement (2), welches ausgebildet ist, wenigstens mittels induktiver Kopplung elektrische Energie zu erhalten,
**dadurch gekennzeichnet, dass**
das Induktionselement (2) zumindest abschnittsweise in der Höhe (Z) unterhalb der Bodenfläche (14) des Bodenkörpers (13) angeordnet ist.

2. Küchengeschirr (1) nach Anspruch 1, **wobei**
das Induktionselement (2) abschnittsweise in der Höhe (Z) unterhalb der Bodenfläche (14) des Bodenkörpers (13) und abschnittsweise innerhalb des Bodenkörpers (13) angeordnet ist.

3. Küchengeschirr (1) nach Anspruch 1 oder 2, **wobei**
das Induktionselement (2) als Induktionsspule (2) ausgebildet ist,
wobei die Induktionsspule (2) einen elektrisch leitfähigen Spulenkern (20) und einen elektrisch isolierenden Spulenmantel (21) aufweist, welcher den Spulenkern (20) der Bodenfläche (14) des Bodenkörpers (13) abgewandt umgibt.

4. Küchengeschirr (1) nach Anspruch 3, **wobei**
der Spulenmantel (21) eine Spulenkernaufnahme (22) aufweist, welche in der Höhe (Z) der Bodenfläche (14) des Bodenkörpers (13) zugewandt ausgerichtet und in welcher der Spulenkern (20) angeordnet ist.

5. Küchengeschirr (1) nach Anspruch 4, **wobei**
der Spulenkern (20) stoffschlüssig, vorzugsweise durch Kleben, und/oder kraftschlüssig und/oder formschlüssig, vorzugsweise durch das Hintergreifen von Halteelementen (23) des Spulenmantels (21), in der Spulenkernaufnahme (22) gehalten wird.

6. Küchengeschirr (1) nach Anspruch 4 oder 5, **wobei**
die Induktionsspule (2) eine elektrisch isolierende Spulenkernabdeckung (24) aufweist, welche die Spulenkernaufnahme (22) in der Höhe (Z) der Bodenfläche (14) des Bodenkörpers (13) zugewandt zumindest abschnittsweise abdeckt.

7. Küchengeschirr (1) nach einem der vorangegangenen Ansprüche, **wobei**
in dem Bodenkörper (13) eine Ausnehmung vorgesehen ist, in welcher eine Induktionsspulenaufnahme (15) und/oder die Spulenkernaufnahme (22) und/oder das Induktionselement (2) in der Höhe (Z) zumindest abschnittsweise aufgenommen ist.

8. Küchengeschirr (1) nach einem der vorangegangenen Ansprüche, **wobei**
die Ausnehmung in den Bodenkörper (13) durch eine Umformung, vorzugsweise durch Prägen oder Pressen, eingebracht ist.

9. Küchengeschirr (1) nach Anspruch 8, **dadurch gekennzeichnet, dass**
die Spulenkernabdeckung (24) innerhalb des Bodenkörpers (13) und der Spulenmantel (21) in der Höhe (Z) unterhalb der Bodenfläche (14) des Bodenkörpers (13) angeordnet sind.

10. Küchengeschirr (1) nach Anspruch 9, **dadurch gekennzeichnet, dass**
der Spulenmantel (21) in der Höhe (Z) an der Bodenfläche (14) des Bodenkörpers (13) anliegend angeordnet ist.

11. Küchengeschirr (1) nach einem der Ansprüche 3 bis 10, **dadurch gekennzeichnet, dass**
der Spulenmantel (21) zumindest abschnittsweise eine geschlossene Durchgangsöffnung aufweist, in welche der Spulenkern (20) eingeschoben ist.

12. Küchengeschirr (1) nach einem der vorangehenden Ansprüche, **gekennzeichnet durch**
wenigstens ein Standelement (18), vorzugsweise einen Kunststoffring (18) oder eine Außenprägung, welches in der Höhe (Z) unterhalb der Bodenfläche (14) des Bodenkörpers (13) angeordnet ist und sich in der Höhe (Z) gleichweit wie das Induktionselement (2) erstreckt,
wobei das Standelement (18) vorzugsweise das Induktionselement (2) umgibt.

13. Küchengeschirr (1) nach Anspruch 1 oder 2, **dadurch gekennzeichnet, dass**
das Induktionselement (2) als Induktionsspule (2) ausgebildet ist,
wobei die Induktionsspule (2) einen elektrisch leitfähigen Spulenkern (20) und eine elektrisch isolierende flächige Abdeckung (26) aufweist, welche den Spulenkern (20) der Bodenfläche (14) des Bodenkörpers (13) abgewandt umgibt,
wobei die flächige Abdeckung (26) in der Höhe (Z) an der Bodenfläche (14) des Bodenkörpers (13) anliegend angeordnet ist.

14. Küchengeschirr (1) nach einem der Ansprüche 3 bis 13, **dadurch gekennzeichnet, dass**
die Induktionsspule (2) einen Induktionsspulenanschluss (25) aufweist, welcher den Spulenkern (20) aufnimmt und einem Griffelement (17) des Küchengeschirrs (1) zuführt,
wobei der Induktionsspulenanschluss (25) zumindest abschnittsweise in den Bodenkörper (13) eingelassen verläuft.

15. Küchengeschirr (1) nach einem der vorangehenden Ansprüche, **dadurch gekennzeichnet, dass**
das Induktionselement (2) ferner ausgebildet ist, einen einseitigen, vorzugsweise einen beidseitigen, Datenaustausch zu ermöglichen.
